# EUROPEAN PATENT APPLICATION

(11) **EP 1 443 413 A1**
(43) Date of publication of application: **04.08.2004**
(21) Application number: 03002062.2
(22) Date of filing: 29.01.2003
(51) Int. Cl.: G06F 13/38

(54) **Apparatus and method for storing data in a memory module**

(71) Applicant: ELITEGROUP COMPUTER SYSTEMS CO.,LTD., Taipei (TW)
(72) Inventor: Hsin-Hung, Huang, Panchiao City, Taipei Hsien (TW)
(74) Representative: Haft, von Puttkamer, Berngruber, Czybulka

(57) **Abstract**

The present invention is to provide an apparatus for storing data comprising a substantially parallelepiped housing, a connector provided at one end of the housing, and at least one volatile memory, a control circuit and power supply means provided therein, wherein the power supply means is able to supply power to both the volatile memory for storing data and the control circuit for maintaining its normal operation. In response to an insertion of the connector to an electronic device, data received from the electronic device via the connector is then processed by the control circuit and then stored in the volatile memory for substantially being read by the electronic device via the control circuit.

## Description

### FIELD OF THE INVENTION

The present invention relates to miniature data storage apparatuses and more particularly to a miniature data storage apparatus removably connected to a computer or the like. Still more particularly, the present invention relates to a method for storing data in the apparatus.

### BACKGROUND OF THE INVENTION

A conventional flash memory is developed from an EEPROM (Electrically Erasable Programmable Read Only Memory). Advantages of the flash memory are inexpensive and high in bit density as compared to the EEPROM. Further, it has advantages of being nonvolatile the same as ROM (Read Only Memory) and writable the same as RAM (Random Access Memory). Furthermore, it has an access rate substantially the same as that of the ROM. Hence, the EEPROM has been substantially replaced by the flash memory in the current market.

The difference between the flash memory and a typical MOS (Metal Oxide Semiconductor) memory is that a gate oxide is formed as a spacer between a gate and a channel of the MOS memory while a floating gate is formed between a control gate and a channel of the flash memory.

Electrons with negative charges may flow to or leave the floating gate in the flash memory due to the physical characteristics and the structure of the floating gate. As such, three operating modes, namely data write (e.g., one byte or word), data read (e.g., one byte or word), and data erase (e.g., one or more memory spaces) can be performed in a cell of the flash memory.

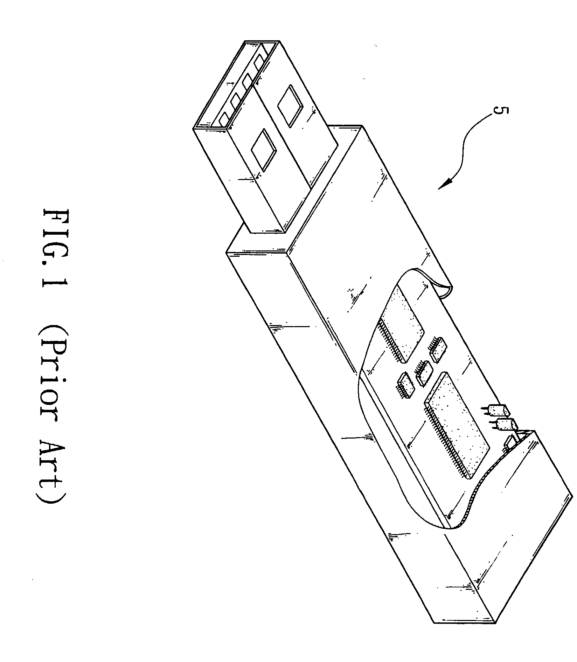

In recent years audio and/or video data storage devices (e.g., MP3) are another trend in the development of flash memory storage technology due to increase of write speed, high memory capacity, and price drop. One of newly developed miniature memory apparatuses 5 such as TREK Thumb Drive (i.e., e-Bar Drive) is available by a Japanese company Trek 2000 International as shown in FIG. 1. Such apparatus incorporates a flash disk as a storage means and a USB (Universal Serial Bus) as an interface and has a hot insertion, hot swapping capability. It has a weight of only 30 g and dimensions (W x H x D) of 45 mm x 17 mm x 4.5 mm. TREK Thumb Drive is particularly suitable to users who require a frequent exchange of substantial data because it is miniature and lightweight and has the hot insertion, hot swapping capability. Typical applications of the apparatus are that storage of large image files of a digital camera, storage of MP3 files, and users who frequently travel by carrying substantial data.

However, technical characteristics of TREK Thumb Drive have been disclosed in a published Chinese Patent No. ZL00114081.7 entitled "Apparatus and Method For Storing Data In A Fully Electronic Flash Memory" and a Japanese Patent Laid-open Publication No. 2001-216099. It is understood that applicants of the above applications will be granted the right in such field if associated patents are issued to them. A data erase of the original data is required prior to writing data into the flash memory. Further, a memory block, having a size of 256 kB to 20 MB, is taken as a write unit for updating data. Hence, a prolonged period of time in data write is consumed.

Moreover, techniques regarding storage means (e.g., Disk-On-Chip) of the flash disk and storage means of the flash memory and its control circuit are provided by M-Systems Flash Disk Pioneers Ltd. Hence, a third party cannot manufacture the flash disk if no technical support is available from M-Systems Flash Disk Pioneers Ltd. Further, as to the flash memory used in TREK Thumb Drive only Samsung of Korea and Toshiba of Japan are capable of manufacturing it. As such, a popularity of the flash memory is not significant and its price is relatively high because as stated above, only two companies can manufacture it. As an end, the miniature memory apparatuses are not popular among vast consumers due to above undesired reasons.

Technical characteristics similar to that of TREK Thumb Drive have been disclosed in another published Chinese Patent No. ZL001114883.7 entitled "Multifunctional Semiconductor Storage Apparatus". In its specification, there are disclosed that semiconductor storage devices include but not limited to flash memory, EEPROM, FRAM (Ferroelectric RAM), DRAM (Dynamic RAM), SRAM (Static RAM), and MRAM (Magnetoresistive RAM). That is, the semiconductor storage devices comprise non-volatile memory (e.g., flash memory) and volatile memory (e.g., DRAM and SRAM). As defined, a non-volatile memory means data stored (i.e., burned) therein can be retained even when power is disconnected. To the contrary, a volatile memory (e.g., RAM, DRAM, or the like) is defined as an effective data can be obtained therefrom only when power is periodically applied thereto (i.e., refreshed). In other words, data is lost when power is out. Typically, capacitors are used for storing data in DRAM. As understood that charges may leak through a real capacitor. Hence, data stored in the capacitor may be lost when power is out. Thus, for retaining data the refreshing of volatile memory is required. However, no power supply component is provided in the multifunctional semiconductor storage device. As a result, a valid data cannot be retained in a volatile memory which is not electrically energized.

In view of the above, for a multifunctional semiconductor storage apparatus formed of volatile memory, data can only be stored therein when it is electrically connected to an active host (e.g., computer). In other words, data will be lost when power applied to the multifunctional semiconductor storage apparatus from the host is cut off. This can cause inconvenience to users. Further, flash Memory provided in the miniature memory apparatus is high in price, thus prohibiting its popularity among vast consumers. As a result, the miniature memory apparatuses are less competitive in the market. Thus improvement exists.

### SUMMARY OF THE INVENTION

A primary object of the present invention is to provide an apparatus for storing data comprising a substantially parallelepiped housing, a connector provided at one end of the housing, at least one volatile memory provided in the housing, a control circuit provided in the housing, and power supply means provided in the housing. The power supply means is able to supply power to both the volatile memory for storing data and the control circuit for maintaining its normal operation. In response to an insertion of the connector to an electronic device, data received from the electronic device via the connector is sent to the control circuit for processing. Next, the processed data is sent to the volatile memory for storage. While the electronic device reading the data, the control circuit reads data stored in the volatile memory, processes the read data, and sends the processed data to the electronic device via the connector. By utilizing this apparatus, it is possible of overcoming the above drawbacks of the prior art due to an implementation of either the flash memory or volatile memory as storage means.

Another object of the present invention is to, in an apparatus including power supply means, a control circuit, at least one volatile memory, and a connector, provide a method for storing data comprising commanding the power supply means to supply power to both the control circuit and the volatile memory for maintaining their normal operations; and commanding the control circuit to process data received from the connector and sending the processed data to the volatile memory for storage, or commanding the control circuit to read data stored in the volatile memory, processing the read data, and sending the processed data to an electronic device via the connected connector.

The above and other objects, features and advantages of the present invention will become apparent from the following detailed description taken with the accompanying drawings.

### BRIEF DESCRIPTION OF THE DRAWINGS

FIG. 1 is a perspective view with a portion cut away of a conventional miniature memory apparatus;
FIG. 2 is a block diagram of an apparatus for storing data according to a preferred embodiment of the invention;
FIG. 3 is a perspective view showing the apparatus insertable in a forward slot of a computer; and
FIG. 4 is a flow chart illustrating a process of storing data according to the invention.

### DETAILED DESCRIPTION OF THE PREFERRED EMBODIMENTS

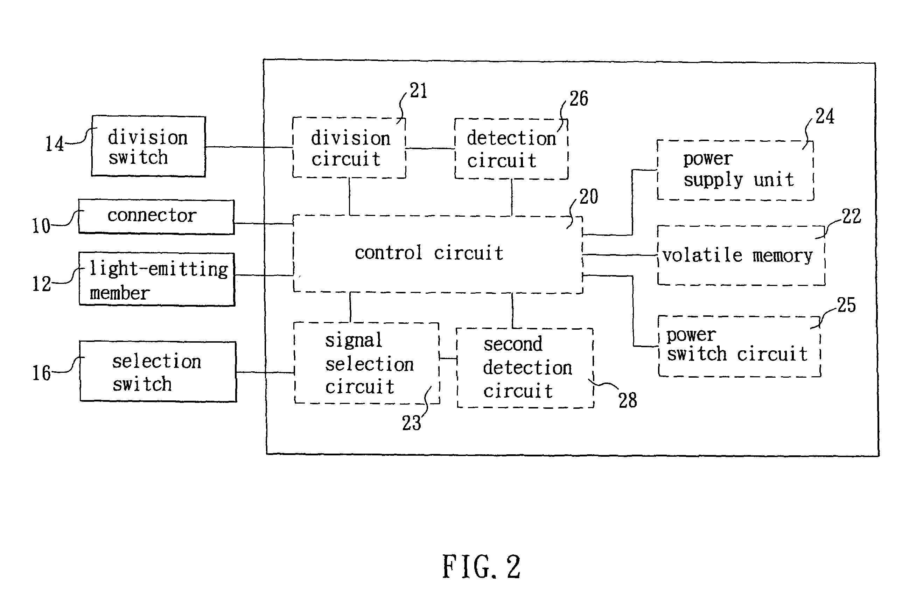

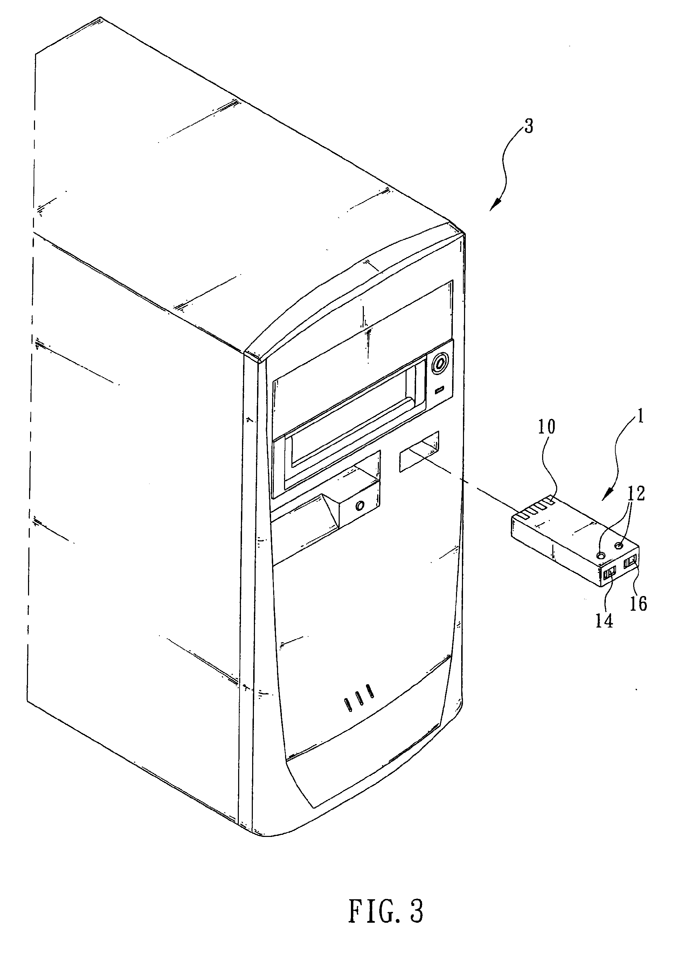

Referring to FIGS. 2 and 3, there is shown an apparatus for storing data in accordance with the invention. The apparatus comprises a substantially parallelepiped housing 1. A connector 10 is formed at a rear end of the housing 1. Within the housing 1 there are provided a control circuit 20, at least one volatile memory 22, and a power supply unit 24 for supplying power to the volatile memory 22 and the control circuit 20 so as to maintain their normal operations. Further, the apparatus may be connected to an electronic device 3 by inserting the connector 10 therein. As such, the control circuit 20 is able to process (e.g., encode or decode) data received from the connector 10. The processed data is in then sent to the volatile memory 22 for storage. Alternatively, the control circuit 20 is able to read data stored in the volatile memory 22 prior to processing the same. Finally, the processed data is sent to the electronic device 3 via the connector 10.

In a preferred embodiment of the invention at least one light-emitting member (two are shown) 12, for user to visually observe a power level of the power supply unit 24, is provided on a top surface of the apparatus. Further, a detection circuit 26 is provided in the housing 1. The detection circuit 26 is electrically connected to the control circuit 20 so that the control circuit 20 is capable of detecting the power level of the power supply unit 24 by means of the detection circuit 26. A detection signal is generated in response to a detection result. The detection signal is in turn sent to the control circuit 20. Hence, the control circuit 20 may control an illumination of the light-emitting member 12 based on the detection signal. It is envisaged that a user can know the power level of the power supply unit 24 by observing the illumination of the light-emitting member 12.

In the embodiment, there is further provided a second detection circuit 28 in the housing 1. The second detection circuit 28 is electrically connected to the control circuit 20. Hence, the control circuit 20 is able to detect an operation of the volatile memory 22 (e.g., data read from the volatile memory 22 by the control circuit 20 or data written into the volatile memory 22 by the control circuit 20) by means of the second detection circuit 28. A second detection signal is generated in response to a second detection result. The second detection signal is in turn sent to the control circuit 20. Hence, the control circuit 20 may control the illumination of the light-emitting member 12 based on the second detection signal. It is envisaged that the user can know the operation of the volatile memory 22 by observing the illumination of the light-emitting member 12.

In the invention the volatile memory 22 may be divided into a plurality of storages the same as a typical hard disk. At a forward end of the housing 1 there is provided a division switch 14. Also, a division circuit 21 is provided in the housing 1. The division circuit 21 is electrically connected to the division switch 14 and the control circuit 20 respectively. A division signal will be generated by the division circuit 21 after the division switch 14 is closed. The division signal is further sent to the control circuit 20. Hence, the control circuit 20 is able to divide the volatile memory 22 into a plurality of storages based on the division signal. Further, one of the storages is taken as a virtual floppy disk by the control circuit 20. In a case that an electrical connection between the apparatus and the electronic device (e.g., computer) 3 is established the electronic device 3 can activate its operating system by using data stored in the storages.

At the forward end of the housing 1 there is further provided a selection switch 16. Also, a signal selection circuit 23 is provided in the housing 1. The signal selection circuit 23 is electrically connected to the selection switch 16 and the control circuit 20 respectively. A selection signal will be generated by the signal selection circuit 23 after the selection switch 16 is closed. The selection signal is further sent to the control circuit 20. Hence, the control circuit 20 is able to cut off the connection between the control circuit 20 and the connector 10 based on the selection signal. As such, the control circuit 20 is not able to receive data sent from the connector 10. As an end, either data read from or data written into the volatile memory 22 is prohibited.

Typically, a volatile memory is provided in the electronic device as a buffer for temporarily storing data. Also, required power thereof is supplied by the electronic device. Hence, in the invention a power switch circuit 25 is provided in the housing 1 for saving electric energy of the power supply unit 24 (i.e., prolonging a use period of time of the power supply unit 24). The power switch circuit 25 is electrically connected to the control circuit 20. The power switch circuit 25 is activated by the control circuit 20 when the apparatus is electrically connected to the electronic device 3. A switch signal will be generated by the power switch circuit 25. The switch signal is further sent to the control circuit 20. Hence, the control circuit 20 is able to cut off a power supply from the power supply unit 24 to the volatile memory 22 based on the switch signal. At this time, power for maintaining a normal operation of the volatile memory 22 is supplied by the electronic device 3. To the contrary, the power supply unit 24 may supply power to the volatile memory 22 in real time once the connection between the apparatus and the electronic device 3 is cut off. The power supply unit 24 is a rechargeable battery in the embodiment. Thus, a portion of power for maintaining the normal operation of the volatile memory 22 supplied by the electronic device 3 may be applied to the battery for charging.

In the embodiment, the volatile memory 22 may be a DRAM, SDRAM (Synchronous DRAM), DDR SRAM (Double Data Rate SRAM), MRAM, or FRAM. Further, the connector 10 is implemented as a USB connector.

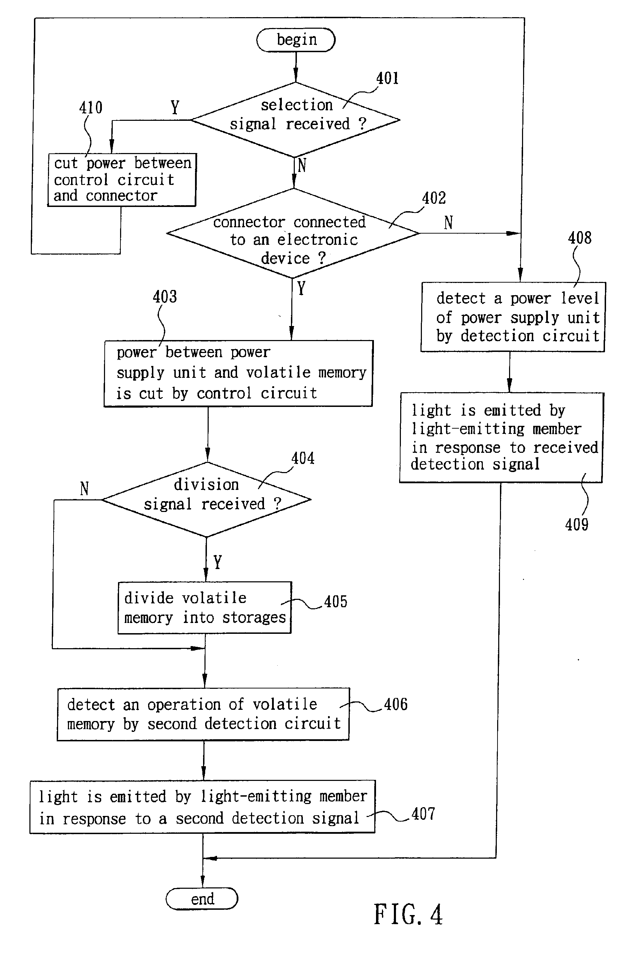

A process of storing data in the apparatus is illustrated in FIG. 4 in conjunction with FIG. 2. The process comprises commanding the power supply unit 24 to supply power to both the control circuit 20 and at least one volatile memory 22 for maintaining their normal operations; commanding the control circuit 20 to process data received from the connector 10; and then sending the processed data to the volatile memory 22 for storage. Alternatively, the process comprises commanding the control circuit to read data stored in the volatile memory 22 prior to processing the same; and finally sending the processed data to the electronic device 3 via the connector 10. The process further comprises commanding the power supply unit 24 to supply power to the volatile memory 22 for maintaining its normal operation when the connector 10 is not electrically connected to the electronic device 3. In other words, a potential loss of stored data in the volatile memory 22 is prevented from occurring even when the connector 10 is not electrically connected to the electronic device 3. In a case that a main power of a typical electronic device (e.g., computer, PDA (Personal Digital Assistant), or the like) is turned off, the embedded volatile memory 22 (e.g., RAM) in the electronic device will be immediately refreshed periodically, thereby retaining a valid data in the volatile memory 22.

Referring to FIG. 4 in conjunction with FIG. 2 again, the apparatus comprises the detection circuit 26, the second detection circuit 28, the division circuit 21, the signal selection circuit 23, and the power switch circuit 25. The process for storing data as performed by the control circuit 20 (which is, as stated above, electrically connected to the connector 10, the detection circuit 26, the second detection circuit 28, the division circuit 21, the signal selection circuit 23, the power switch circuit 25, the power supply unit 24, and the volatile memory 22 respectively) comprises the following steps:
In step 401 as a beginning, it is determined whether a selection signal sent from the signal selection circuit 23 is received. If yes, the process jumps to step 410. Otherwise, the process goes to step 402.
In step 402, it is determined whether the connector 10 is electrically connected to the electronic device 3. If yes, the process goes to step 403. Otherwise, the process jumps to step 408.
In step 403, a switch signal is generated by the power switch circuit 25. The switch signal is further sent to the control circuit 20. Hence, the control circuit 20 is able to cut off a power supply from the power supply unit 24 to the volatile memory 22 based on the switch signal. At this time, power for maintaining a normal operation of the volatile memory 22 is supplied by the electronic device 3.
In step 404, it is determined whether the division signal sent from the division circuit 21 has been received. If yes, the process goes to step 405. Otherwise, the process jumps to step 406.
In step 405, divides the volatile memory 22 into a plurality of storages. At this time, the electronic device 3 may take the storages as different hard disks. For example, the electronic device 3 is implemented as a computer and an operating system thereof is Microsoft Windows. Further, the storages are labeled as different hard disks such as D drive, E drive, etc.
In step 406, detects an operation of the volatile memory 22 by means of the second detection circuit 28. A second detection signal is generated by the second detection circuit 28 in response to a second detection result.
In step 407, sends the received second detection signal to the light-emitting member 12. A light is emitted by the light-emitting member 12 in response to the second detection signal. The process ends immediately.
In step 408, detects a power level of the power supply unit 24 by means of the detection circuit 26. In response, one of a plurality of different detection signals is generated based on the detected power level.
In step 409, sends the received detection signal to the light-emitting member 12. A light is emitted by the light-emitting member 12 in response to the detection signal. The process ends immediately.
In step 410, a selection signal is generated by the signal selection circuit 23. The selection signal is further sent to the control circuit 20. Hence, the control circuit 20 is able to cut off an electrical connection between the control circuit 20 and the connector 10 based on the selection signal. As such, the control circuit 20 is not able to receive data sent from the connector 10. The process then loops back to step 408.

In the invention, the detection circuit 26 detects a voltage of the power supply unit 24 for indicating the power level of the power supply unit 24. In response, a detection signal indicating the power level of the power supply unit 24 is generated.

In brief, the invention utilizes the volatile memory 22 as a storage means. Further, the power supply unit 24 is utilized for supplying power to the volatile memory 22 so as to maintain its normal operation. Furthermore, price of the volatile memory 22 is much lower than that of non-volatile memory and technical characteristics of the volatile memory 22 are not owned by a single party. Hence, manufacturers are able to manufacture the invention in a relatively low cost. As a result, vast consumers may buy products made based on the technical characteristics of the invention in a relatively low price.

While the invention has been described by means of specific embodiments, numerous modifications and variations could be made thereto by those skilled in the art without departing from the scope and spirit of the invention set fort in the claims.

## Claims

1. An apparatus for storing data comprising:
a substantially parallelepiped housing;
a connector provided at one end of the housing so that the apparatus is connectable to an electronic device by inserting the connector therein;
at least one volatile memory for storing data provided in the housing;
a control circuit provided in the housing, the control circuit being operative to process data received from the connector, the processed data being sent to the volatile memory for storage, or read data stored in the volatile memory, process the read data, and send the processed data to the electronic device via the connector; and
power supply means provided in the housing for supplying power to both the volatile memory and the control circuit so as to maintain their normal operations.

2. The apparatus of claim 1, further comprising at least one light-emitting member on the housing and a first detection circuit in the housing, the first detection circuit being electrically connected to the control circuit so that the control circuit is capable of controlling an illumination of the light-emitting member by means of the first detection circuit.

3. The apparatus of claim 1, further comprising a second detection circuit in the housing, the second detection circuit being electrically connected to the control circuit so that the control circuit is capable of detecting an operation of the volatile memory by means of the second detection circuit wherein a second detection signal is generated in response to a detection result, the second detection signal is sent to the control circuit, and the control circuit is capable of controlling the illumination of the light-emitting member based on the second detection signal.

4. The apparatus of claim 1, further comprising a division switch on the housing and a division circuit in the housing, the division circuit being electrically connected to the division switch and the control circuit respectively wherein a division signal will be generated by the division circuit after the division switch is closed, the division signal is sent to the control circuit, and the control circuit is capable of dividing the volatile memory into a plurality of storages based on the division signal.

5. The apparatus of claim 4, wherein one of the storages is taken as a virtual floppy disk by the control circuit.

6. The apparatus of claim 1, further comprising a selection switch on the housing and a signal selection circuit in the housing, the signal selection circuit being electrically connected to the selection switch and the control circuit respectively wherein a selection signal will be generated by the signal selection circuit after the selection switch is closed, the selection signal is sent to the control circuit, and the control circuit is capable of cutting off a connection between the control circuit and the connector based on the selection signal, thereby prohibiting the control circuit from receiving data sent from the connector.

7. The apparatus of claim 1, further comprising a power switch circuit in the housing, the power switch circuit being electrically connected to the control circuit and the power supply means respectively wherein the power switch circuit is activated by the control circuit when the apparatus is electrically connected to the electronic device, a switch signal will be generated by the power switch circuit, the switch signal is sent to the power supply means, the power supply means is capable of stopping supplying power to the volatile memory based on the switch signal, and the electronic device is commanded to supply power to the volatile memory for maintaining its normal operation.

8. In an apparatus including power supply means, a control circuit, at least one volatile memory, and a connector, a method for storing data comprising:
commanding the power supply means to supply power to both the control circuit and the volatile memory for maintaining their normal operations;
commanding the control circuit to process data received from the connector and sending the processed data to the volatile memory for storage, or commanding the control circuit to read data stored in the volatile memory, processing the read data, and sending the processed data to the connector; and
commanding the power supply means by the control circuit for supplying power to the volatile memory so as to maintain its normal operation and retain a valid data therein.

9. The method of claim 8, wherein the apparatus further comprises a first detection circuit, a second detection circuit, a division circuit, a signal selection circuit, and a power switch circuit and the control circuit is electrically connected to the connector, the first detection circuit, the second detection circuit, the division circuit, the signal selection circuit, the power switch circuit, the power supply means, and the volatile memory respectively, the method as performed by the control circuit comprising the steps of:
(a) determining whether a selection signal sent from the signal selection circuit is received;
(b) if the determination in the step (a) is negative determining whether the connector is electrically connected to the electronic device;
(c) if the determination in the step (b) is positive activating the power switch circuit to generate a switch signal, sending the switch signal to the control circuit, commanding the power supply means to stop supplying power to the volatile memory by the control circuit based on the switch signal, and commanding the electronic device to supply power to the volatile memory for maintaining its normal operation;
(d) determining whether a division signal sent from the division circuit is received;
(e) if the determination in the step (d) is positive dividing the volatile memory into a plurality of storages wherein the storages are labeled as different hard disks by the electronic device;
(f) detecting an operation of the volatile memory by the second detection circuit so as to generate a detection signal in response to a detection result; and
(g) sending the received detection signal to at least one light-emitting member for emitting light in response to the detection signal.

10. The method of claim 9, if the determination in the step (b) is negative further comprising the steps of:
(c1) detecting a power level of the power supply means by the first detection circuit so as to generate one of a plurality of different detection signals based on the detected power level; and
(c2) sending the received detection signal to the light-emitting member for emitting light in response to the detection signal.

11. The method of claim 10, further comprising the step of commanding the first detection circuit to detect a voltage of the power supply means for indicating the power level of the power supply means and to generate a detection signal indicating the power level of the power supply means.

12. The method of claim 9, in response to a receiving of the selection signal sent from the signal selection circuit, further comprising the steps of sending the selection signal to the control circuit, commanding the control circuit to cut off an electrical connection between the control circuit and the connector based on the selection signal, and prohibiting the control circuit from receiving data sent from the connector.

13. The method of claim 12, in response to the electrical disconnection between the control circuit and the connector, further comprising the steps of:
commanding the first detection circuit to detect a power level of the power supply means by the control circuit so as to generate one of a plurality of different detection signals based on the detected power level; and
sending the received detection signal to the light-emitting member for emitting light in response to the detection signal.
